# DEMANDE DE BREVET EUROPEEN

(11) **EP 1 524 200 A1**
(43) Date de publication de la demande: **20.04.2005**
(21) Numéro de dépôt: 04292456.3
(22) Date de dépôt: 15.10.2004
(51) Int. Cl.: B65D 77/02, B65D 30/06

(54) **Conditionnement pour produits de la mer du genre crevettes ou langoustines, et procédé de traitement utilisant un tel conditionnement**

(30) Priorité: 15.10.2003 FR 0312044
(71) Demandeur: France Agro Industries, 44340 Bougueneais (FR)
(72) Inventeur: Besnardeau, Guy, BP 4395 Antananarivo 101 (MG)
(74) Mandataire: Michelet, Alain

(57) **Abrégé**

La présente invention a pour objet un conditionnement original pour la manipulation et le traitement d'un lot de crevettes ou de langoustines (2).
Ce conditionnement consiste en une structure de filet (3) destinée à contenir le lot de crevettes ou langoustines (2). Ce filet (3) est réalisé en un matériau apte à résister au(x) traitement(s) appliqué(s) auxdits produits (2) suite à leur capture ; il présente une dimension de mailles adaptée pour retenir les produits individualisés du lot, et il comporte au moins une ouverture obturable (5) permettant son remplissage par les produits.
De préférence, cette structure de filet (3) est équipée d'un organe d'identification (7) comportant des informations sur l'origine des produits, de sorte à assurer leur traçabilité.

La présente invention a également pour objet l'emballage pour le stockage, le transport et/ou la présentation à la vente des produits. Cet emballage (1) comprend le filet (3) décrit ci-dessus, disposé dans un suremballage (4) approprié.

## Description

La présente invention concerne un conditionnement original pour des produits de la mer genre crevettes ou langoustines ; elle a également pour objet un procédé de traitement de crevettes ou langoustines utilisant de tels conditionnements.

Les produits de type crevettes ou langoustines subissent habituellement de nombreux brassages, manipulations et/ou transferts entre le moment de leur capture et celui de leur présentation à la vente au consommateur.
Ces produits sont en particulier transférés entre plusieurs installations successives qui permettent leur triage en fonction de leur calibre, mais aussi pour leur faire subir différentes opérations de traitement (traitement antioxydant, traitement thermique : refroidissement, cuisson, congélation, décongélation et/ou simple mise à température). Selon le cas, soit ils sont regroupés dans des réceptacles adaptés à chaque type d'opération de traitement, soit ils sont simplement disposés en vrac sur un support au sein de chaque installation.
Ensuite, les produits convenablement traités sont encore transférés dans des emballages adaptés pour leur stockage, leur transport et/ou leur présentation à la vente.

Cependant, toutes ces manipulations sont la cause de détériorations des crustacés (détachement de la tête, apparition de marques de chocs, etc...); et le rendement final, en terme de produits entiers commercialisables, s'avère ainsi diminué.

En outre, ces différents transferts rendent les opérations de traçabilité difficiles et délicates à mener, voire impossibles en particulier suite à une opération de cuisson. En effet, il n'existe pas, à ce jour, de moyens simples apportant au distributeur ou au consommateur des informations fiables sur l'origine des crustacés, en particulier des crustacés sauvages.

La présente invention vise à remédier à ces inconvénients en proposant une structure originale adaptée pour assurer le conditionnement des crevettes ou des langoustines depuis leur capture jusqu'à leur présentation en vente auprès du consommateur, en passant par les différentes phases de traitements intermédiaires habituels (traitements de conservation, congélation, cuisson, réfrigération ...). Ce conditionnement facilite la manipulation des produits ; il limite leur brassage et diminue les risques de détérioration. D'autre part, il peut être utilisé pour fiabiliser la traçabilité des produits conditionnés, et il permet également de valoriser les produits lors de leur présentation à la vente en lots.

A cet effet, la présente invention propose l'utilisation d'une structure de filet pour assurer le conditionnement en lot des crevettes ou langoustines ; la structure de filet correspondante est réalisée en un matériau apte à résister au(x) traitement(s) appliqués(s) auxdits produits suite à leur capture ; ce filet présente encore une dimension de maille adaptée pour retenir les produits individualisés du lot, et il comporte au moins une ouverture obturable permettant son remplissage par le lot de produits.

On notera ici qu'il était connu de conditionner des denrées alimentaires dans une structure de filet ou d'emballage perforé (voir notamment les documents FR-1 298 271, ou encore EP-0 630 828), mais ceci dans des domaines très éloignés de celui de l'industrie de la pêche des crevettes ou des langoustines, concerné par la présente invention.

Selon une disposition particulièrement intéressante, la structure de filet est équipée d'un organe d'identification comprenant des informations sur l'origine de capture des produits, de sorte à permettre leur traçabilité. Ces informations concernent par exemple le numéro d'agrément du bateau, la date et la zone de capture des produits, et le trait de filet ou coup de chalut.
De préférence, l'organe d'identification est associé à un élément de fermeture faisant office de scellés qui est adapté pour obturer l'ouverture de remplissage du filet.

Selon une première possibilité, la structure de filet est en forme de poche munie d'une ouverture de remplissage, adaptée pour être obturée une fois ledit filet rempli.

Dans une variante de réalisation, la structure de filet est en forme de manchon muni de deux ouvertures de remplissage. En pratique, l'une de ces ouvertures est obturée préalablement pour permettre le remplissage du filet à partir de l'autre ouverture, cette dernière étant obturée une fois le remplissage effectué.

La structure du filet conforme à l'invention est avantageusement réalisée en une matière synthétique (plastique de type polyéthylène ou polypropylène) ou naturelle (coton ...) de manière à résister aux différentes opérations de traitement subies par le lot de produits de la mer.

La présente invention concerne également un emballage pour le stockage, le transport et/ou la présentation à la vente de ces produits, lequel emballage se caractérise par le fait qu'il comporte une structure de filet tel que décrit précédemment, lequel filet contient un lot de crevettes ou de langoustines et est disposé dans un suremballage approprié.
De préférence, le suremballage en question assure un accès visuel direct à au moins une partie du filet interne, et aux produits contenus dans le filet.

Selon une première forme de réalisation, ce suremballage est en forme de barquette destinée à recevoir le filet contenant le lot de produits. La barquette correspondante est constituée d'un fond rectangulaire délimitée par une ceinture de parois latérales ; un film plastique externe transparent est éventuellement rapporté de sorte à envelopper l'ensemble barquette/filet, par exemple pour mise sous vide ou gaz neutre.

Selon une autre forme envisageable, le suremballage est constitué d'une structure en forme de boîte parallélépipédique, dont l'une au moins des parois comporte une fenêtre permettant un accès visuel direct au filet, et aux produits contenus dans ce filet.

La présente invention concerne encore le procédé de traitement des crustacés genre crevettes ou langoustines utilisant le conditionnement décrit précédemment.
Ce procédé de traitement consiste, après la capture des produits :
- à trier les produits en fonction de leur calibre,
- à répartir les produits de même calibre en plusieurs lots ou groupes de poids déterminé,
- à conditionner chaque lot ou groupe de produits dans une structure de filet telle que décrite ci-dessus, puis
- à congeler les produits, directement dans leur filet, par application d'un fluide de traitement approprié.

Dans une variante de ce procédé de traitement, les produits sont traités par un liquide contenant un produit antioxydant, type métabisulfite, avant l'opération de congélation précitée.

Selon encore une variante, les produits congelés sont ensuite soumis à une opération de décongélation, par application d'un fluide de traitement approprié, sans les retirer de leur filet. Une fois décongelés, ces produits peuvent être vendus en l'état.

Selon encore une autre variante, les produits congelés peuvent ensuite être soumis à une opération de décongélation, par application d'un fluide de traitement approprié, sans les retirer de leur filet. Les produits décongelés sont ensuite cuits, toujours dans leur filet, par application d'un fluide de traitement approprié, puis réfrigérés ou éventuellement congelés par application d'un autre fluide de traitement.

Selon une disposition particulière de ce procédé, le ou les traitements de congélation sont réalisés par application d'un fluide approprié sur les produits contenus dans le filet, lequel filet est disposé dans un réceptacle parallélépipédique formant moule, de façon à obtenir un bloc parallélépipédique de produits congelés.

Après les différentes opérations de traitement, les produits toujours dans leur filet, sont placés dans un suremballage dont la structure assure un accès visuel direct audit filet et aux produits qu'il contient, en vue de la présentation à la vente.

Mais l'invention sera encore illustrée, sans aucunement être limitée, par la description suivante d'un conditionnement original pour crevettes ou langoustines conforme à l'invention, et aussi d'un procédé de traitement utilisant le conditionnement conforme à l'invention. Cet emballage et ce procédé sont illustrés par les dessins annexés dans lesquels :
- la figure 1 est une vue schématique en perspective d'une forme de réalisation possible d'un emballage conforme à l'invention pour le stockage, le transport et/ou la présentation à la vente d'un lot de crevettes ;
- la figure 2 est une présentation schématique des principales étapes du procédé de traitement des produits utilisant un conditionnement en forme de filet conforme à l'invention.

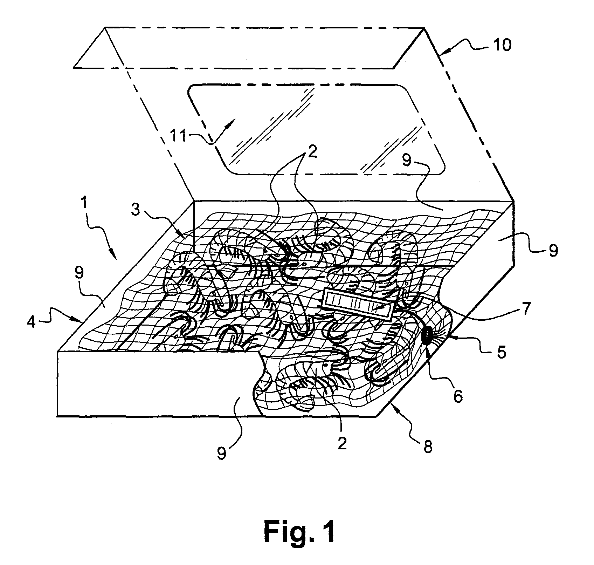

La figure 1 représente un emballage 1 pour le stockage, le transport et/ou la présentation à la vente d'un lot de produits de la mer du genre crustacés, en particulier ici de crevettes 2.
Cet emballage 1 est constitué d'un filet 3 en forme de poche contenant le lot de crevettes 2, et d'un suremballage 4 dans lequel est disposé le lot de crevettes en filet.

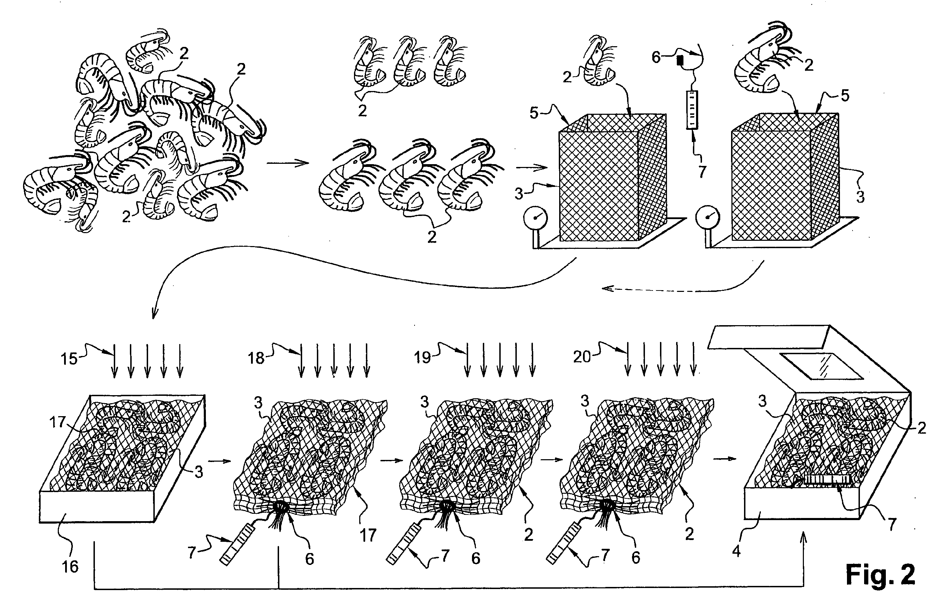

Le filet correspondant 3 est réalisé en un matériau apte à résister au(x) traitement(s) usuellement appliqué(s) aux crevettes suite à leur capture, tel que développé par la suite en relation avec la figure 2. Ce matériau est avantageusement choisi parmi les matières plastiques de type polyéthylène ou polypropylène ; bien entendu, le matériau correspondant peut également être choisi parmi toute autre matière synthétique appropriée, et aussi parmi certaines matières naturelles comme le coton.
Ce filet 3 présente une dimension de mailles adaptée pour retenir les crevettes 2, lorsqu'elles sont individualisées. Par exemple, le filet 3 comprend des mailles carrées de 10 à 15 mm de côté, soit 20 à 30 mm étirées.

Le filet 3 comporte encore une ouverture 5 permettant son remplissage par le lot de crevettes 2. L'ouverture 5 est ici obturée par un élément de fermeture 6 faisant office de scellés. Cet élément de fermeture 6 est associé à un organe d'identification 7 en forme d'étiquette qui comporte des informations sur l'origine de capture des produits, c'est-à-dire notamment le numéro d'agrément du bateau, la zone et la date de pêche, ainsi que le trait de filet ou coup de chalut.
L'obturation de l'ouverture 5 du filet 3 par cette structure de scellés 6 permet aux distributeurs, et aussi aux consommateurs, d'identifier l'origine de capture des crevettes 2, avec une grande fiabilité. Cet élément de contrôle supplémentaire est un atout majeur pour la sécurité alimentaire du consommateur.
Bien entendu, l'organe d'identification 7 peut présenter toute autre forme, et il peut être associé à tout élément de fixation approprié ; cet organe d'identification 7 peut aussi être rapporté en tout endroit du filet 3.

Selon une variante de réalisation, le filet 3 peut également se présenter sous la forme générale d'un manchon, muni de deux ouvertures de remplissage. Ces ouvertures sont de préférence chacune obturées au moyen d'éléments de fermeture/scellés, tels que décrits ci-dessus.

Le suremballage précité 4 présente ici une structure en forme de barquette, réalisée par exemple en carton. Ce suremballage 4 est constitué d'un fond rectangulaire 8, délimité par une ceinture de parois latérales 9 ; il présente des dimensions adaptées selon la forme et le volume du lot de produits 2 en filet 3.

Ce suremballage 4 en forme de barquette permet un accès visuel direct au filet 3, et aussi aux crevettes 2 contenues dans ce filet.

En terme de finition, un film plastique transparent externe (non représenté) peut être rapporté de sorte à envelopper l'ensemble barquette 4/filet 3.

Selon une variante de réalisation représentée en pointillés sur la figure 1, l'une des parois latérales 9 de la barquette 4 peut être prolongée par une paroi 10, raccordée par une ligne de pliage, pour former un élément de couvercle.
Ce couvercle 10 présente avantageusement une découpe 11 adaptée pour permettre l'accès visuel direct au filet 3, aux crevettes 2 et éventuellement à l'organe d'identification 7 ; la découpe 11 peut être obturée par une feuille de matière plastique translucide.

Bien entendu, le lot de produits 2 en filet 3 pourra être disposé dans tout autre emballage approprié en vue de son stockage, son transport et/ou sa présentation à la vente, par exemple un panier en osier, une cagette en bois, une barquette en plastique

La figure 2 représente les principales étapes du procédé de traitement des crevettes mises en oeuvre entre la capture et l'emballage final, lequel procédé utilise le filet 3 décrit précédemment en relation avec le figure 1.

Tout d'abord, les crustacés d'intérêt, ici des crevettes 2, sont capturés par des méthodes de pêche bien connues de l'homme du métier, en particulier par des coups de chalut ; les crevettes 2 ainsi obtenues ont un calibre très variable.

Ces crevettes 2 commencent par être soumises à une opération de triage sur le bateau de pêche. Ce triage consiste de manière classique en un calibrage manuel ou mécanique.
Les crevettes de même calibre sont ensuite distribuées dans les filets 3 décrits précédemment en relation avec la figure 1, chaque filet étant soumis à pesée de manière à obtenir des lots de poids déterminé (le poids en question est adapté pour obtenir un poids final déterminé pour la présentation à la vente, ceci en fonction des variations pondérales liées aux différents traitements futurs appliqués aux produits).
Le remplissage des filets 3 s'effectue par leur ouverture 5 ; cette ouverture 5 est ensuite obturée au moyen de l'élément de fermeture 6 précité. Tel qu'abordé précédemment, l'élément de fermeture correspondant est équipé d'un dispositif d'identification 7, en forme d'étiquette, comportant des informations appropriées concernant l'origine des crevettes.

Les lots de produits ainsi obtenus, convenablement identifiés, sont soumis à diverses opérations de traitement mises en oeuvre par toute installation appropriée. Les installations correspondantes, et les liquides de traitement utilisés dans ces installations sont classiques et bien connus de l'homme du métier.

Tout d'abord, les produits en lots 2 sont congelés, directement dans leur filet 3, par application d'un fluide de traitement approprié 15. Cette congélation, réalisée sur le bateau de pêche, permet d'assurer la conservation des produits dans les meilleures conditions, et leur transport jusqu'au(x) site(s) de transformation ultérieure ou directement jusqu'au consommateur.
Pour cette opération de congélation, chaque lot de produits est avantageusement disposé dans un réceptacle 16, de type moule parallélépipédique en forme de barquette. Les dimensions du réceptacle 16 et les caractéristiques du filet 3 sont choisis de sorte à obtenir un bon remplissage dudit réceptacle 16 par le lot de produits. La congélation des produits en filet dans ces réceptacles 16 permet l'obtention de blocs parallélépipédiques 17 présentant une forme et un calibre déterminés.

Le fluide de traitement 15 permettant la congélation des crevettes 2 est par exemple une saumure à - 20°C. Cette saumure est de préférence appliquée par une technique d'arrosage sur les produits. Le fond des réceptacles 16 est alors de préférence ajouré pour favoriser l'évacuation des fluides de traitement.
Bien entendu, l'opération de congélation des crevettes peut être mise en oeuvre par toute autre technique, par exemple par immersion ou ventilation.

Les blocs 17 de crevettes en filets peuvent être conditionnés en groupes ou individuellement dans des suremballages appropriés, pour leur stockage et leur transport en particulier ; on comprend bien que la conformation en bloc parallélépipédique facilite ces opérations de mise sous emballage.

Dans la plupart des cas, les crevettes congelées sur le bateau sont ensuite acheminées dans le pays de consommation où elles subissent différents traitements de préparation avant leur présentation à la vente.

A cet effet, les lots 17 de produits 2 congelés en filets sont soumis à une opération de décongélation au moyen d'un liquide de traitement approprié 18.
L'opération de traitement correspondante est par exemple mise en oeuvre au moyen d'une installation d'arrosage, ou par immersion.

Les produits décongelés, toujours dans leur filet 3, sont soit placés dans un suremballage en vue de leur présentation à la vente (par exemple un suremballage 4 tel que présenté figure 1), soit soumis à une opération de cuisson par un liquide de traitement approprié 19. Ici encore, cette opération peut être mise en oeuvre par une technique d'arrosage sur les filets de produits, ou par immersion.

Les crevettes cuites dans leur filet 3 sont ensuite refroidies ou réfrigérées par l'application d'un fluide adapté 20.
Ces lots de produits 2 sont, pour finir, disposés chacun dans un suremballage 4, en vue de leur présentation à la vente.

Selon une alternative, les lots de crevettes cuites peuvent être soumis préalablement à leur emballage à une opération de congélation dans des réceptacles appropriés, conformément à la méthode décrite précédemment.

Le procédé de traitement utilisant le filet 3, décrit en relation avec cette figure 2, peut être complété par toute autre opération de traitement appropriée.
On peut par exemple envisager l'application de liquides de traitement complétés par tout additif approprié, à savoir des antioxydants (métabisulfite ...), des substances d'enrobage (sorbitol ...) ou encore des antibactériens (GDL ...).

La description qui précède, en relation avec la figure 2, permet de bien comprendre que les crevettes 2 restent dans le même filet 3 à partir du moment de la constitution des lots sur le bateau, jusqu'à leur présentation à la vente.

Les lots correspondants étant constitués dès l'origine avec un poids déterminé, il n'est plus nécessaire d'effectuer d'autres opérations de pesées ultérieures, ce qui entraîne un gain de temps, ce qui limite l'investissement en matériel de pesée et ce qui diminue les risques de détérioration des produits. Comme on l'a indiqué précédemment, le poids initial des lots mis en filets est adapté au poids final souhaité, en fonction des variations pondérales connues, liées aux traitements appliqués.
D'autre part, la constitution des lots de produits en filet limite le brassage des produits lors des différentes opérations de traitement. Cette mise en filet est particulièrement bien adaptée aux différents traitements thermiques appliqués (froid ou chaleur) ; les échanges thermiques correspondants peuvent s'effectuer dans d'excellentes conditions, le filet permettant une circulation efficace des liquides de traitement entre les crustacés. L'emploi de tels filets assure encore une possibilité d'égouttage des liquides précités, de manière simple et efficace.
De plus, les crevettes restant dans le même filet depuis la capture jusqu'à la mise en vente, l'organe d'identification 7 associé à chaque lot permet tant au distributeur qu'au consommateurs, de connaître l'origine de capture des crevettes avec une certitude accrue. Cette particularité est un atout majeur pour la traçabilité des produits, et facilite grandement les contrôles sanitaires.
En outre, le conditionnement des produits en filet offre une esthétique originale agréable et renforce l'attrait du produit lors de sa présentation en vente.

## Revendications

1. Utilisation d'une structure de filet (3) pour le conditionnement d'un lot (2) de crevettes ou de langoustines, laquelle structure de filet (3) est réalisée en un matériau apte à résister au(x) traitement(s) appliqué(s) auxdits produits (2) suite à leur capture, lequel filet (3) présente une dimension de maille adaptée pour retenir lesdits produits individualisés (2) du lot, et comporte au moins une ouverture obturable (5) permettant son remplissage par lesdits produits (2).

2. Utilisation selon la revendication 1, **caractérisée en ce que** la structure de filet (3) est équipée d'un organe d'identification (7) comportant des informations sur l'origine de capture des produits (2), en vue de permettre leur traçabilité.

3. Utilisation selon la revendication 2, **caractérisée en ce que** l'organe d'identification (7) est associé à un élément de fermeture (6), faisant office de scellés, adapté pour obturer l'ouverture (5) du filet (3).

4. Utilisation selon l'une quelconque des revendications 1 à 3, **caractérisée en ce que** la structure de filet (3) est en forme de poche destinée à contenir le lot de produits (2), lequel filet (3) est muni d'une ouverture (5) permettant son remplissage, laquelle ouverture (5) est adaptée pour être obturée une fois ledit filet (3) rempli.

5. Utilisation selon l'une quelconque des revendications 1 à 3, **caractérisée en ce que** la structure de filet (3) est en forme de manchon muni de deux ouvertures en vis-à-vis, l'une desdites ouvertures étant destinée à être obturée préalablement pour permettre le remplissage dudit filet (3) à partir de l'autre ouverture, cette dernière étant obturée une fois le remplissage effectué.

6. Utilisation selon l'une quelconque des revendications 1 à 5, **caractérisée en ce que** la structure de filet (3) est réalisée en matière plastique de type polypropylène ou polyéthylène, ou en matière naturelle de type coton.

7. Emballage pour le stockage, le transport et/ou la présentation à la vente de crevettes ou de langoustines (2), **caractérisé en ce qu'**il comprend un filet (3) destiné à contenir lesdites crevettes ou langoustines (2) selon l'une quelconque des revendications 1 à 6, lequel filet (3) est disposé dans un suremballage (4).

8. Emballage selon la revendication 7, **caractérisé en ce qu'**il comprend un suremballage (4) dont la structure assure un accès visuel direct à au moins une partie du filet (3) et aux produits (2) contenus dans ledit filet (3).

9. Emballage selon la revendication 8, **caractérisé en ce qu'**il comprend un suremballage (4) en forme de barquette, munie d'un fond rectangulaire (8) délimité par une ceinture de parois latérales (9), laquelle barquette est destinée à recevoir le filet (3) contenant les produits (2), un film externe en matière plastique transparente enveloppant éventuellement l'ensemble barquette (4)/filet (3) pour mise sous vide ou sous gaz neutre.

10. Emballage selon la revendication 8, **caractérisé en ce qu'**il comprend un suremballage (4) constitué d'une boîte parallélépipédique dont l'une au moins des parois (10) comporte une fenêtre (11) permettant un accès visuel direct au filet (3) et aux produits (2) contenus dans ledit filet (3).

11. Procédé de traitement de produits de la mer (2) genre crevettes ou langoustines, **caractérisé en ce qu'**il consiste, après la capture des produits (2) :
- à trier lesdits produits (2) en fonction de leur calibre,
- à répartir lesdits produits (2) de même calibre en plusieurs lots de poids déterminé,
- à conditionner chaque lot de produits (2) dans une structure de filet (3) selon l'une quelconque des revendications 1 à 6, puis
- à congeler lesdits produits (2) directement dans leur filet (3), par application d'un fluide de traitement approprié (15).

12. Procédé selon la revendication 11, **caractérisé en ce qu'**il consiste, avant l'opération de congélation, à traiter les produits (2) par un liquide contenant un produit antioxydant, type métabisulfite.

13. Procédé selon l'une quelconque des revendications 11 ou 12, **caractérisé en ce qu'**il consiste, suite à l'opération de congélation, à décongeler les produits congelés par application d'un fluide de traitement approprié (18) sans les retirer de leur filet (3), en vue de leur présentation à la vente en l'état.

14. Procédé selon l'une quelconque des revendications 11 ou 12, **caractérisé en ce qu'**il consiste, suite à l'opération de congélation :
- à décongeler les produits congelés, par application d'un fluide de traitement approprié (18) sans les retirer de leur filet (3),
- à cuire les produits décongelés, toujours contenus dans leur filet (3), par application d'un fluide de traitement approprié (19),
- à réfrigérer ou éventuellement à congeler à nouveau les produits cuits, toujours dans leur filet (3), par application d'un fluide de traitement approprié (20).

15. Procédé selon l'une quelconque des revendications 11 à 14, **caractérisé en ce que** le ou les traitements de congélation sont réalisés par application d'un fluide de traitement approprié (20) sur les produits (2), contenus dans le filet (3), lequel filet (3) est disposé dans un réceptacle (16) de type moule parallélépipédique, de façon à obtenir un bloc parallélépipédique de produits congelés contenus dans un filet (3).

16. Procédé selon l'une quelconque des revendications 11 à 15, **caractérisé en ce que** le filet (3) contenant les produits de la mer traités (2), est placé, en vue de sa présentation à la vente, dans un suremballage (4) dont la structure assure un accès visuel direct audit filet (3) et aux produits (2) qu'il contient.
